# EUROPEAN PATENT APPLICATION

(11) **EP 4 322 081 A1**
(43) Date of publication of application: **14.02.2024**
(21) Application number: 23185073.6
(22) Date of filing: 12.07.2023
(51) Int. Cl.: G06Q 10/04, G06Q 10/06, G06Q 10/08, G06Q 10/10, G06Q 50/10

(54) **ELECTRICAL EQUIPMENT INFRASTRUCTURE SELECTION SYSTEMS**

(30) Priority: 10.08.2022 US 202217818925
(71) Applicant: Schneider Electric IT Corporation, Foxboro, MA 02035 (US)
(72) Inventor: Fallon, Raymond Michael, ORANMORE, H91 C6DF (IE)
(74) Representative: Plasseraud IP

(57) **Abstract**

Techniques are described for a computing device to receive from a user, a selection of EEI drawn from a list of EEI. A method includes (a) receiving a relative selection criterion from the user, the relative selection criterion including a target value for a first feature of the EEI and a direction of comparison; (b) filtering out, from the list, EEI having values for the first feature that are outside the direction of comparison from the target value; (c) sorting remaining EEI from the list based on closeness of the first feature to the target value, yielding a sorted order; (d) displaying the remaining EEI in the sorted order on a display screen; and (e) receiving a selection of EEI from the displayed EEI from the user via a user interface device. A system, apparatus, and computer program product for performing this method and similar methods are also described.

## Description

### BACKGROUND

Web applications configured to display new electrical equipment infrastructure (EEI) to web application users (hereinafter "users") may allow those users to select particular EEI items for purchase. For example, the web application may display various servers, power supply units, and other EEI, and a user may select a particular server as well as a particular power supply unit for that server.

### SUMMARY

However, automatically determining which EEI to display to the user, and in what order to display those items, such that the display is most helpful to the user may present a technical obstacle. For example, a user may not know that a particular item of EEI is not compatible with another previously selected EEI item. As another example, although a user may be able to enter a filtering or sorting criterion to make the list of available EEI items more readable, existing systems may not be able to provide the ability to enter enough filtering and sorting criteria to be used in conjunction in order to be helpful.

For example, suppose that a user desires to configure a new enterprise server system including a rack, a server, and a power supply. If the user selects the server device first, he may be unaware that some of the available racks are not compatible with that server because they are the wrong width. As another possibility, the user may not be aware that certain power supplies are not compatible with the selected server because their power output capacities are too small. Even if the user does know the maximum power usage of the server, the user may not be able to easily select power supplies that have an optimal power delivery capacity. Thus, for example, although a server may have a maximum power usage of 1000 Watts (W), operating a power supply that is rated at 3000 W to power a server with a maximum power draw of only 1000 W is not efficient. Rather, that server should be paired with a power supply having a capacity of at least 1000 W while also staying as close to 1000 W as possible.

Thus, it would be desirable for a web application to include a configuration tool that allows a user to configure EEI in a flexible manner using a flexible set of sorting and filtering tools. In some embodiments, a configuration tool includes a relative selection criterion that allows a user to enter a target value for a feature, which allows the tool to filter out EEI items that do not meet the target criterion and to also sort the remaining items of EEI based on closeness to the target value for the feature. For example, if the user enters a target value of at least 1000 W, then the tool would filter out power supplies whose maximum supply capacity is less than 1000W but also display power supplies whose capacity is exactly 1000 W first, followed by those slightly above (e.g., 1100 W), followed by those whose supply capacities are even higher (e.g., 2000 W). In some embodiments, the tool may automatically filter out items of EEI that are not compatible with previous selections based on a database of compatibility criteria. In some embodiments, the tool may provide the option to the user to enter several different criteria of different types.

In one embodiment, a computer program product is described. The computer program product includes a non-transitory computer-readable storage medium storing a set of instructions, which, when executed by a computing device, cause the computing device to receive, from a user, a selection of Electrical Equipment Infrastructure (EEI) drawn from a list of EEI, by: (1) receiving a relative selection criterion from the user, the relative selection criterion including a target value for a first feature of the EEI and a direction of comparison; (2) filtering out, from the list, EEI having values for the first feature that are outside the direction of comparison from the target value; (3) sorting remaining EEI from the list based on closeness of the first feature to the target value, yielding a sorted order; (4) displaying the remaining EEI in the sorted order on a display screen; and (5) receiving a selection of EEI from the displayed EEI from the user via a user interface device.

In one embodiment, a computer program product is described in which the set of instructions, when executed by the computing device, further cause the computing device to receive a soft selection criterion from the user, the soft selection criterion indicating a second feature that the user would prefer the EEI to have; and sorting the remaining EEI from the list includes multiplying a relative weight for each of the remaining EEI from the list by a soft weight for that EEI, the relative weight being based on the closeness of the value of the first feature for that EEI to the target value and the soft weight being based on whether that EEI includes the second feature. In one embodiment, a computer program product is described in which the soft weight is configured to have one of a fixed number of at least two discrete values: (a) a first value for EEI that includes the second feature, and (b) one or more second values for EEI that does not include the second feature, the first value being larger than each of the one or more second values.

In one embodiment, a computer program product is described in which sorting the remaining EEI from the list includes calculating a relative weight for each remaining EEI from the list, the relative weight being based on the closeness of the value of the first feature for that EEI to the target value. In one embodiment, a computer program product is described in which calculating the relative weight for each remaining EEI from the list includes dividing 1 by the sum of 1 and the absolute difference between the value of the first feature for that EEI and the target value (1 / (1+ |first feature value - target value|)). In one embodiment, a computer program product is described in which sorting the remaining EEI from the list further includes, for EEI having equal relative weights, sorting those EEI with equal relative weights using another sorting criterion. In one embodiment, a computer program product is described in which sorting those EEI using the other sorting criterion includes sorting based on at least one of price or popularity of those EEI among other users.

In one embodiment, a computer program product is described in which the set of instructions, when executed by the computing device, further cause the computing device to: receive a hard selection criterion from the user, the hard selection criterion including a cutoff value for a second feature of the EEI and a second direction of comparison; and prior to sorting, further filter out, from the list, EEI having values for the second feature that are outside the second direction of comparison from the cutoff value.

In one embodiment, a computer program product is described in which the set of instructions, when executed by the computing device, further cause the computing device to present a plurality of criterion selection options to the user in a predetermined order, the plurality of criterion selection options at least including a first option to choose the relative selection criterion. In one embodiment, a computer program product is described in which presenting the plurality of criterion selection options to the user in the predetermined order includes: presenting the user with a second option to choose a hard selection criterion as an initial criterion selection option presented to the user prior to all others of the plurality of criterion selection options, the hard selection criterion including a cutoff value for a second feature of the EEI and a second direction of comparison; and presenting the user with the first option to choose the relative selection criterion as a last criterion selection option presented to the user after all others of the plurality of criterion selection options. In one embodiment, a computer program product is described in which presenting the plurality of criterion selection options to the user in the predetermined order further includes presenting the user with a third option to choose a soft selection criterion as an intermediate criterion selection option presented to the user after the initial criterion selection option and before the last criterion selection option, the soft selection criterion indicating a third feature that the user would prefer the EEI to have.

In one embodiment, a method is described for a computing device to receive, from a user, a selection of EEI drawn from a list of EEI. The method includes (1) receiving a relative selection criterion from the user, the relative selection criterion including a target value for a first feature of the EEI and a direction of comparison; (2) filtering out, from the list, EEI having values for the first feature that are outside the direction of comparison from the target value; (3) sorting remaining EEI from the list based on closeness of the first feature to the target value, yielding a sorted order; (4) displaying the remaining EEI in the sorted order on a display screen; and (5) receiving a selection of EEI from the displayed EEI from the user via a user interface device.

In one embodiment, a method is described in which the method further comprises receiving a soft selection criterion from the user, the soft selection criterion indicating a second feature that the user would prefer the EEI to have; and sorting the remaining EEI from the list includes multiplying a relative weight for each of the remaining EEI from the list by a soft weight for that EEI, the relative weight being based on the closeness of the value of the first feature for that EEI to the target value and the soft weight being based on whether that EEI includes the second feature. In one embodiment, a method is described in which the soft weight is configured to have one of a fixed number of at least two discrete values: (a) a first value for EEI that includes the second feature, and (b) one or more second values for EEI that does not include the second feature, the first value being larger than each of the one or more second values.

In one embodiment, a method is described in which sorting the remaining EEI from the list includes calculating a relative weight for each remaining EEI from the list, the relative weight being based on the closeness of the value of the first feature for that EEI to the target value. In one embodiment, a method is described in which calculating the relative weight for each remaining EEI from the list includes dividing 1 by the sum of 1 and the absolute difference between the value of the first feature for that EEI and the target value (1 / (1+ |first feature value - target value|)).

In one embodiment, a computing system is described. The computing system includes (I) a display screen; (II) a user interface (UI) device; and (III) computing circuitry coupled to memory that is configured to: (1) receive a relative selection criterion from the user via the UI device, the relative selection criterion including a target value for a first feature of Electrical Equipment Infrastructure (EEI) drawn from a list of EEI and a direction of comparison; (2) filter out, from the list, EEI having values for the first feature that are outside the direction of comparison from the target value; (3) sort remaining EEI from the list based on closeness of the first feature to the target value, yielding a sorted order; (4) display the remaining EEI in the sorted order on the display screen; and (5) receive a selection of EEI from the displayed EEI from the user via the UI device.

In one embodiment, a computing system is described in which the computing circuitry coupled to the memory is further configured to receive a soft selection criterion from the user, the soft selection criterion indicating a second feature that the user would prefer the EEI to have; and sorting the remaining EEI from the list includes multiplying a relative weight for each of the remaining EEI from the list by a soft weight for that EEI, the relative weight being based on the closeness of the value of the first feature for that EEI to the target value and the soft weight being based on whether that EEI includes the second feature. In one embodiment, a computing system is described in which the soft weight is configured to have one of a fixed number of at least two discrete values: (a) a first value for EEI that includes the second feature, and (b) one or more second values for EEI that does not include the second feature, the first value being larger than each of the one or more second values.

In one embodiment, a computing system is described in which sorting the remaining EEI from the list includes calculating a relative weight for each remaining EEI from the list, the relative weight being based on the closeness of the value of the first feature for that EEI to the target value.

### BRIEF DESCRIPTION OF THE DRAWINGS

The foregoing and other objects, features, and advantages will be apparent from the following description of particular embodiments of the invention, as illustrated in the accompanying drawings in which like reference characters refer to the same parts throughout the different views. The drawings are not necessarily to scale, emphasis instead being placed upon illustrating the principles of various embodiments of the invention.
Fig. 1 illustrates an example system, apparatus, computer program product, and associated data structures for use in connection with one or more embodiments.
Fig. 2 illustrates an example method in accordance with one or more embodiments.
Fig. 3 illustrates an example method in accordance with one or more embodiments.

### DETAILED DESCRIPTION

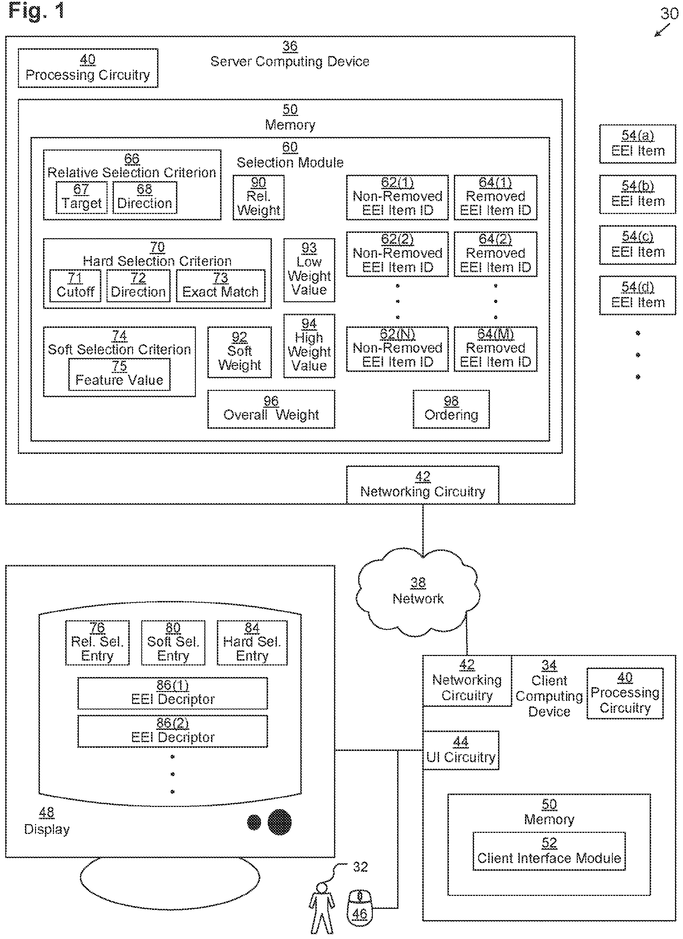

Fig. 1 depicts an example system 30 for use in connection with various embodiments. System 30 includes a client computing device 34 operated by a user 32. Client computing device 32 connects to a server computing device 36 via network 38. In some embodiments, instead of the user 32 interacting with client computing device 34 that is separate from the server computing device 36, user 32 may instead interact with a computing device that combines the functions of the client computing device 34 the server computing device 36 without the intervening network 38.

Both client computing device 34 and server computing device 36 may be any kind of computing device, such as, for example, a personal computer, laptop, workstation, server, enterprise server, tablet, smartphone, etc. Both client computing device 34 and server computing device 36 include processing circuitry 40 and memory 50. In embodiments in which network 38 is used, client computing device 34 and server computing device 36 can also both include network interface circuitry 42. In addition, client computing device 34 also includes user interface (UI) circuitry 44 for connecting to a UI input device 46 and a display device 48. Client computing device 34 and server computing device 36 may also include various additional features as is well-known in the art, such as, for example, interconnection buses, etc.

Processing circuitry 40 may include any kind of processor or set of processors configured to perform operations, such as, for example, a microprocessor, a multi-core microprocessor, a digital signal processor, a system on a chip (SoC), a collection of electronic circuits, a similar kind of controller, or any combination of the above.

Network interface circuitry 34 may include one or more Ethernet cards, cellular modems, Fibre Channel (FC) adapters, InfiniBand adapters, wireless networking adapters (e.g., Wi-Fi), and/or other devices for connecting to a network 38, such as, for example, a LAN, WAN, SAN, the Internet, a wireless communication network, a virtual network, a fabric of interconnected switches, etc.

Memory 50 may include any kind of digital system memory, such as, for example, random access memory (RAM). Memory 50 stores an operating system (OS, not depicted, e.g., a Linux, UNIX, Windows, MacOS, or similar operating system) and various drivers and other applications and software modules configured to execute on processing circuitry 40.

UI circuitry 44 may include any circuitry needed to communicate with and connect to one or more user input devices 46 and display screens 48. UI circuitry 44 may include, for example, a keyboard controller, a mouse controller, a touch controller, a serial bus port and controller, a universal serial bus (USB) port and controller, a wireless controller and antenna (e.g., Bluetooth), a graphics adapter and port, etc.

Display screen 48 may be any kind of display, including, for example, a CRT screen, LCD screen, LED screen, etc. Input device 46 may include a keyboard, keypad, mouse, trackpad, trackball, pointing stick, joystick, touchscreen (e.g., embedded within display screen 48), microphone/voice controller, etc. In some embodiments, instead of being external to client computing device 34, the input device 46 and/or display screen 48 may be embedded within the client computing device 34 (e.g., a cell phone or tablet with an embedded touchscreen).

Memory 50 of client computing device 34 stores a client interface module 52, which is configured to execute on processing circuitry 40 of client computing device 34 to interface between the user 32 operating UI devices 46, 48 and the server computing device 36.

Memory 50 of server computing device 36 stores a selection module 60, which is configured to execute on processing circuitry 40 of server computing device 36 to interface with user 32 via client interface module 52 to allow the user 32 to select an item 54 of electrical equipment infrastructure (EEI) from a set of available EEI items 54(a), 54(b) 54(c), 54(d), ....

In operation, selection module 60 causes client interface module 52 to display a relative selection criterion entry form 76 on display 48. User 32 may then enter information into relative selection criterion entry form 76 to be sent to selection module 60 as relative selection criterion 66. In an embodiment, relative selection criterion 66 includes a target value 67 and a direction 68 for a particular feature associated with the available EEI items 54. For example, if the available EEI items 54 are power supplies and the particular feature is a power supply capacity, then the target value 67 may be a target power supply capacity (e.g., 1000 W) entered by the user 32 via input device 46, and the direction 68 is larger, indicating that only power supplies with a power supply capacity greater than or equal to the target value 67 should be included within a list of EEI items 54 displayed to the user 32, while power supplies with a power supply capacity less than the target value 67 should not be included.

Selection module 60 may store an EEI item identifier (ID) 62, 64 for respective EEI items 54. Initially, all EEI items 54 might be represented by non-removed EEI item IDs 62 (depicted as non-removed EEI item IDs 62(1), 62(2), ... , 62(N)). Upon applying relative selection criterion 66, IDs corresponding to EEI items 54 that are filtered out (e.g., power supplies that can only supply less than 1000 W) are removed, thereby become removed EEI item IDs 64 (depicted as removed EEI item IDs 64(1), 64(2), ... , 64(M)), correspondingly reducing the number, N, of non-removed EEI item IDs 62. Client interface module 52 is configured to display EEI descriptors 86 of the EEI items 54 identified by the non-removed EEI item IDs 62. An EEI descriptor 86 includes information about a particular EEI item 54, such as, for example, its name, specifications, and price.

Selection module 60 may also store an ordering 98 that determines in what order the EEI descriptors 86 of the EEI items 54 identified by the non-removed EEI item IDs 62 are depicted on the display 48. Ordering 98 may be defined, at least in part, based on the relative selection criterion 66, with non-removed EEI item IDs 62 having features closer to the target value 67 having a higher priority within ordering 62 than non-removed EEI item IDs 62 having features that are farther from the target value 67. In some embodiments, selection module 60 may determine the ordering 98 by calculating a relative weight 90 for each non-removed EEI item ID 62, the relative weight 90 being based on the closeness of the value of the feature for the corresponding EEI item 54 to the target value 67. For example, if the feature is the power supply capacity and the target value is 1000 W, as in the example above, then the relative weight 90 for each non-removed EEI item ID 62 may be calculated based on closeness of the power supply capacity of the EEI item 54 identified by that non-removed EEI item ID 62. In one embodiment, the calculation may include dividing 1 by the sum of 1 and the absolute difference between the value of the feature for that EEI item 54 and the target value 67 (i.e., 1 / (1+ |feature value - target value|)).

It should be understood that the list of removed EEI item IDs 64 may also include IDs of EEI items 54 that are of a completely different type than items under consideration. For example, EEI items 54 may include, for example, power supplies, racks, and servers. While the user 32 is looking at servers, IDs of EEI items 54 that are not servers (e.g., power supplies and racks) may be listed as removed EEI item IDs 64.

In further operation, in some embodiments, selection module 60 causes client interface module 52 to display a hard selection criterion entry form 84 on display 48. User 32 may then enter information into the hard selection criterion entry form 80 to be sent to selection module 60 as hard selection criterion 70. In an embodiment, hard selection criterion 70 includes a cutoff value 71 and a direction 72 for a particular feature associated with the available EEI items 54. In another embodiment, hard selection criterion 70 instead includes one or more exact match values 73. For example, if the available EEI items 54 are servers and the particular feature is an amount of RAM, then the cutoff value 71 may be an amount of RAM (e.g., 4 GB) entered by the user 32 via input device 46, and the direction 72 is larger, indicating that only servers with more than the cutoff value 71 of 4 GB of RAM should be included within a list of EEI items 54 displayed to the user 32, while servers with less than the cutoff value 71 of 4 GB of RAM should not be included. As another example, if the available EEI items 54 are power supplies and the particular feature is a voltage, then the exact match value 73 may be a particular power supply voltage (e.g., 110 V) entered by the user 32 via input device 46, indicating that only power supplies with a power supply voltage equal to the exact match value 73 of 110 V should be included within a list of EEI items 54 displayed to the user 32, while power supplies with a power supply voltage other than (greater than or less than) the exact match value 73 of 110 V should not be included. Upon applying hard selection criterion 70, IDs corresponding to EEI items 54 that are filtered out (e.g., servers having less than 4 GB of RAM) are removed, thereby becoming removed EEI item IDs 64, correspondingly reducing the number, N, of non-removed EEI item IDs 62.

In further operation, in some embodiments, selection module 60 causes client interface module 52 to display a soft selection criterion entry form 80 on display 48. User 32 may then enter information into soft selection criterion entry form 80 to be sent to selection module 60 as soft selection criterion 74. In an embodiment, soft selection criterion 74 includes a feature value 75 for a particular feature associated with the available EEI items 54. For example, if the available EEI items 54 are power supplies and the particular feature is whether or not the power supply includes an uninterruptable power supply (UPS) feature, then the feature value 75 may be an affirmative value entered by the user 32 via the input device 46, indicating that power supplies with a UPS feature should be prioritized within a list of EEI items 54 displayed to the user 32, while power supplies without a UPS feature should be deprioritized. This prioritization may be accomplished by calculating a soft weight 92 for each non-removed EEI item ID 62 and multiplying that soft weight 92 by a relative weight 90 already calculated for that non-removed EEI item ID 62 based on the relative selection criterion 66 to yield an overall weight 96. Calculating the soft weight 92 may include selectively assigning one of a fixed number of at least two discrete values: (a) a first (high) weight value 94 for EEI items 54 that affirmatively include the particular feature, and (b) one or more second values (e.g., a low weight value 93) for EEI items 54 that do not include the particular feature, the first weight value 94 being larger than each of the one or more second values. Returning to the example of the UPS feature, power supplies that have the UPS feature may be assigned the first (high) weight value 94 (e.g., a value of 10), while power supplies that do not have the UPS feature may be assigned a second (low) weight value 93 (e.g., a value of 1). In a related example, power supplies that do not have the full UPS feature but do have a very short battery backup may instead be assigned an intermediate weight value (e.g., a value of 5). Ordering 98 may then be updated based on the overall weight 96 for each non-removed EEI item ID 62, so that the highest priority EEI descriptor 86(1) represents an EEI item 54 that has a first feature (e.g., power supply capacity) very close to the target value 67 and a second feature that matches the feature value 75 (e.g., affirmatively having a UPS feature), while the lowest priority EEI descriptors 86 represent EEI items 54 that has a first feature (e.g., power supply capacity) not close to the target value 67 and a second feature that does not match the feature value 75 (e.g., not having a UPS feature).

Memory 50 may also store various other data structures used by the OS, modules 52, 60 and various other applications and drivers. In some embodiments, memory 50 may also include a persistent storage portion. Persistent storage portion of memory 50 may be made up of one or more persistent storage devices, such as, for example, magnetic disks, flash drives, solid-state storage drives, or other types of storage drives. Persistent storage portion of memory 50 is configured to store programs and data even while the computing device 34, 36 is powered off. The OS, modules 52, 60 and various other applications and drivers are typically stored in this persistent storage portion of memory 50 so that they may be loaded into a system portion of memory 50 upon a system restart or as needed. The OS, modules 52, 60 and various other applications and drivers, when stored in non-transitory form either in the volatile or persistent portion of memory 50, each form a computer program product. The processing circuitry 40 running one or more applications thus forms a specialized circuit constructed and arranged to carry out the various processes described herein.

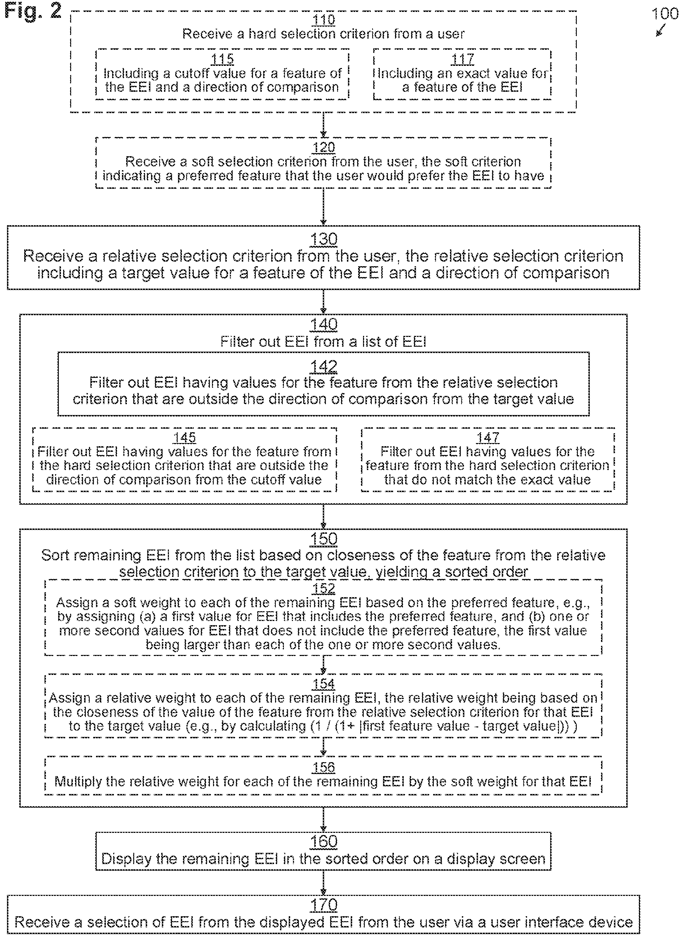

Fig. 2 illustrates an example method 100 performed by a system 30 for receiving from a user 32, a selection of EEI drawn from a list of EEI items 54. It should be understood that any time a piece of software (e.g., OS, modules 52, 60, etc.) is described as performing a method, process, step, or function, what is meant is that a computing device (e.g., client computing device 34 or server computing device 36) on which that piece of software is running performs the method, process, step, or function when executing that piece of software on its processing circuitry 40. It should be understood that one or more of the steps or sub-steps of method 100 may be omitted in some embodiments. Similarly, in some embodiments, one or more steps or sub-steps may be combined together or performed in a different order. Dashed lines indicate that a step or sub-step is either optional or representative of alternate embodiments or use cases.

In optional step 110, client interface module 52 receives a hard selection criterion 70 from a user 32 via a user input device 46 (e.g., in response to displaying a hard selection criterion entry form 84 on display 48). At some point, client interface module 52 forwards the received hard selection criterion 70 to selection module 60 operating on server computing device 36. In some embodiments, step 110 includes sub-step 115, while in other embodiments, step 110 includes sub-step 117. In sub-step 115, receiving the hard selection criterion 70 includes receiving a cutoff value 71 (e.g., 4 GB) and a direction 72 of comparison (e.g., larger) for a particular feature (e.g., amount of RAM for a server). In sub-step 117, receiving the hard selection criterion 70 includes receiving an exact match value 73 (e.g., 110 V) for a particular feature (e.g., power supply voltage for a power supply).

In optional step 120, client interface module 52 receives a soft selection criterion 74 from a user 32 via a user input device 46 (e.g., in response to displaying a soft selection criterion entry form 80 on display 48), the soft selection criterion 74 indicating a preferred feature that the user would prefer the EEI to have. At some point, client interface module 52 forwards the received soft selection criterion 74 to selection module 60 operating on server computing device 36.

In step 130, client interface module 52 receives a relative selection criterion 66 from a user 32 via a user input device 46 (e.g., in response to displaying a relative selection criterion entry form 76 on display 48). The relative selection criterion 66 includes a target value 67 (e.g., 1000 W) for a feature (e.g., power supply capacity) of the EEI (e.g., a power supply) and a direction 68 of comparison (e.g., larger). Client interface module 52 also forwards the received relative selection criterion 66 to selection module 60 operating on server computing device 36.

Then, in step 140, selection module 60 performs filtering to determine the removed EEI item IDs 64 and the non-removed EEI item IDs 62. Step 140 may include sub-step 142. In sub-step 142, selection module 60 evaluates the EEI items 54 against the relative selection criterion 66. EEI items 54 having a feature (e.g., a power supply capacity) subject to the relative selection criterion 66 that exceeds (if the direction 68 is lower) or is less than (if the direction 68 is greater) the target value 67 (e.g., 1000 W) are removed, so the identifiers of those EEI items 54 are removed from the list of non-removed EEI item IDs 62 and added to the list of removed EEI item IDs 64.

In some embodiments (i.e., when step 110 was performed), step 140 includes sub-step 145 (i.e., when sub-step 115 was performed) or sub-step 147 (i.e., when sub-step 117 was performed). In sub-steps 145, 147, selection module 60 evaluates the EEI items 54 against the hard selection criterion 70. It should be understood that there may be more than one hard selection criterion 70, in which case multiple filtering steps are performed. In sub-step 145, EEI items 54 having a feature (e.g., an amount of RAM) subject to the hard selection criterion 70 that exceeds (if the direction 72 is lower) or is less than (if the direction 72 is greater) the cutoff value 71 (e.g., 4 GB) are removed, so the identifiers of those EEI items 54 are removed from the list of non-removed EEI item IDs 62 and added to the list of removed EEI item IDs 64. In sub-step 147, EEI items 54 having a feature (e.g., a power supply voltage) subject to the hard selection criterion 70 that do not equal the exact match value 73 (e.g., 110 V) are removed, so the identifiers of those EEI items 54 are removed from the list of non-removed EEI item IDs 62 and added to the list of removed EEI item IDs 64.

Then, in step 150, selection module 60 sorts the non-removed EEI item IDs 62 at least based on feature closeness to the target 67 of the relative selection criterion 66. In some embodiments, step 150 may include one or more of sub-steps 152, 154, 156.

In sub-step 152 (performed only if step 120 was performed), selection module 60 assigns a soft weight 92 to each of the non-removed EEI item IDs 62 based on the preferred feature (selected in step 120). For example, in one embodiment, selection module 60 assigns by assigning, as the soft weight 92, (a) a first value (e.g., high weight value 94) for EEI items 54 that include the preferred feature, and (b) one or more second values (e.g., low weight value 93) for EEI items 54 that do not include the preferred feature, the first value 94 being larger than each of the one or more second values 93.

In sub-step 154, selection module 60 assigns a relative weight 90 to each of the non-removed EEI item IDs 62, the relative weight 90 being based on the closeness of the value of the feature from the relative selection criterion 66 (selected in step 130) for the EEI item 54 corresponding to that non-removed EEI item ID 62 to the target value 67. In one embodiment, this assignment may include calculating (1 / (1+ |feature value -target value|)). In other embodiments, other formulas may be used instead.

Then, in sub-step 156 (performed only if step 120 was performed), selection module 60 calculates the overall weight 96 for each of the non-removed EEI item IDs 62 by multiplying the relative weight 90 (calculated in sub-step 154) by the soft weight 92 (calculated in sub-step 152) for that non-removed EEI item ID 62. In embodiments in which step 152 is omitted, the relative weight 90 may be used as the overall weight 96. Once the overall weights 96 have been calculated, they may be sorted from high to low in order to yield the ordering 98.

Then, in step 160, client interface module 52 displays descriptions of the non-removed EEI item IDs 62 in the sorted order 98 on display screen 48, in the form of EEI descriptors 86. It should be understood that it is possible that all of the EEI descriptors 86 may not be visible on the display 48 at once, since the user 32 may operate input device 46 to scroll through the list of EEI descriptors 86. In some embodiments, client interface module 52 may operate as a web page within a web browser operating on client computing device 34 in communication with selection module 60 operating as a web server on server computing device 36.

Finally, in step 170, selection module 60 receives a selection of an EEI item 54 from the user 32 via the user making a selection of one of the EEI descriptors 86 using the input device 46, the selection being transmitted from client computing device 34 to server computing device 36.

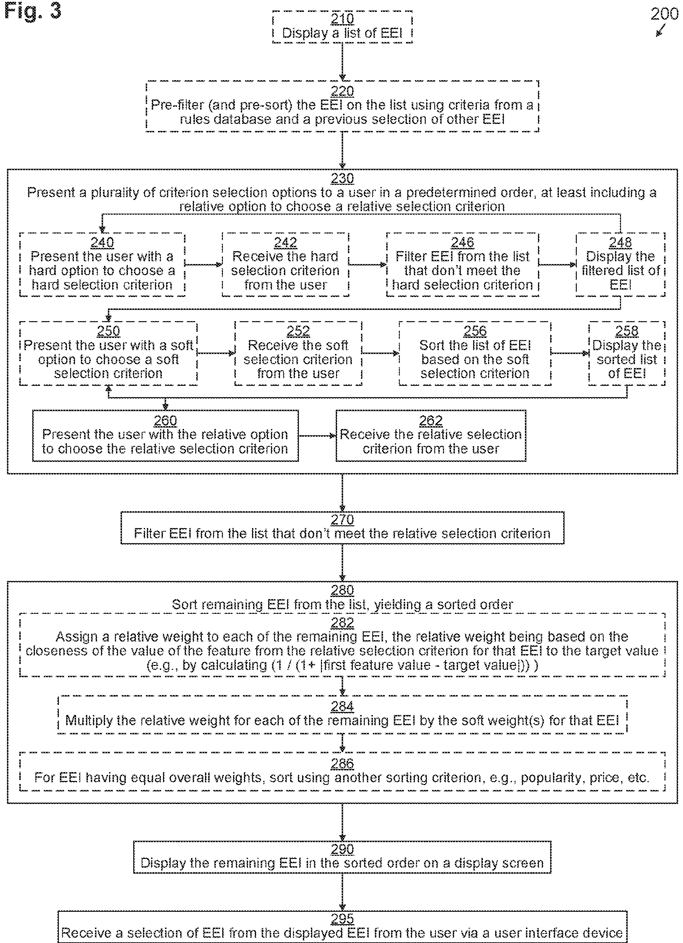

Fig. 3 illustrates an example method 200 performed by a system 30 for receiving from a user 32, a selection of EEI drawn from a list of EEI items 54. It should be understood that one or more of the steps or sub-steps of method 200 may be omitted in some embodiments. Similarly, in some embodiments, one or more steps or sub-steps may be combined together or performed in a different order. Dashed lines indicate that a step or sub-step is either optional or representative of alternate embodiments or use cases. It should be understood that method 200 is not intended to be inconsistent with method 100. Rather, each of methods 100, 200 covers several possible embodiments, some of which may be the same or at least overlap.

In optional step 210, client interface module 52 displays a list of EEI descriptors 86 to the user 32 on display 48. In some embodiments, the EEI descriptors 86 may initially represent all of the available EEI items 54, even if they are of different types. For example, the initially displayed list of EEI descriptors 86 may represent EEI items 54, some of which are servers, some of which are racks, and some of which are power supplies. In other embodiments, only EEI descriptors 86 representing the same class of EEI items 54 (e.g., only servers, only racks, or only power supplies) may be displayed together.

In optional step 220, which may be performed in parallel with step 210, selection module 60 may pre-filter (and possibly also pre-sort) the list of EEI descriptors 86. This may be accomplished by performing a preliminary filtering operation to exclude certain EEI items 54 by assigning their identifiers as removed EEI item IDs 64 based on criteria obtained from a rules database as well as a previous selection of other EEI items 54. For example, if a user 32 has already selected a particular server, then, as part of step 220, selection module 60 may mark the identifiers of all other EEI items 54 that are also servers as removed EEI item IDs 64. In addition, selection module 60 may also consult a compatibility database to exclude any other types of EEI items 54 that are incompatible with the selected particular server. For example, if the selected particular server has a width of 19 inches, selection module 60 may classify racks and power supplies with other widths (e.g., 10 inches, 23 inches, etc.) with removed EEI item IDs 64. As another example, if the selected particular server has a power usage of 1500 W, selection module 60 may classify power supplies with power supply capacities below 1500 W with removed EEI item IDs 64. In addition, in some embodiments, as part of step 220, selection module 60 may pre-sort the non-removed EEI item IDs 62 based on an initial set of sorting criteria, such as, for example, price or popularity. In some embodiments, selection module 60 may pre-sort the non-removed EEI item IDs 62 based on a priority criterion. For example, EEI items 54 that are approaching their end of life may be given a higher priority. As another example, EEI items 54 for which there is surplus supply may also be given a higher priority.

Then, in step 230, client interface module 52 presents a plurality of criterion selection options to the user 32 in a predetermined order, at least including a relative option (e.g., relative selection criterion entry form 76) to select a relative selection criterion 66. Step 230 at least includes sub-steps 260 and 262. Step 230 also at least includes either sub-steps 240, 242, 246, 248) and/or sub-steps 250, 252, 256, 258.

In some embodiments, in sub-step 240, client interface module 52 presents the user 32 with a hard option to choose a hard selection criterion 70, such as by displaying hard selection criterion entry form 84 (e.g., received from selection module 60 operating as a web server) on display 48. For example, client interface module 52 may prompt the user 32 to select a particular feature type (e.g., power supply voltage, power supply capacity, amount of RAM, server/rack/power supply width, etc.) and whether the hard selection criterion 70 should include a cutoff value 71 (having a direction 72 of comparison) or an exact match value 73, also prompting the user 32 to enter the appropriate value(s) 71, 72, 73. Then, in sub-step 242, client interface module 52 receives input from the user 32 via the input device(s) 46, which it sends to the selection module 60. Then, in sub-step 246, selection module 60 applies a filter based on the received hard selection criterion 70 to add additional removed EEI item IDs 64 (and correspondingly remove those from the list of non-removed EEI item IDs 62); see, e.g., sub-steps 145, 147 from method 100. Then, in sub-step 248, the client interface module 52 presents an updated list of EEI descriptors 86 based on the newly updated list of non-removed EEI item IDs 62 from the selection module 60. In some embodiments, after sub-step 248, operation may loop back to sub-step 240 to allow the user 32 to enter another hard selection criterion 70, while in other embodiments, operation may instead advance to either sub-step 250 or sub-step 260.

In some embodiments, in sub-step 250, client interface module 52 presents the user 32 with a soft option to choose a soft selection criterion 74, such as by displaying soft selection criterion entry form 80 (e.g., received from selection module 60 operating as a web server) on display 48. For example, client interface module 52 may prompt the user 32 to select a particular feature type (e.g., whether a power supply has a UPS feature, whether a power supply has a particular number of outlets, whether an EEI item 54 is pre-integrated, etc.) and a preferred feature value 75 for that feature type (e.g., yes or no; a set of non-binary values with an order of preference, etc.). In some embodiments, client interface module 52 may also prompt the user 32 to input a low weight value 93 and a high weight value 94 (and one or more intermediate weight values in the case of non-binary values), although in other embodiments, these weight values 93, 94 may be pre-assigned. Then, in sub-step 252, client interface module 52 receives input from the user 32 via the input device(s) 46, which it sends to the selection module 60. Then, in sub-step 256, selection module 60 performs sorting based on the received soft selection criterion 74 to the list of non-removed EEI item IDs 62; see, e.g., sub-step 152 from method 100. Then, in sub-step 258, client interface module 52 presents an updated list of EEI descriptors 86 based on the newly updated ordering 98 from the selection module 60. In some embodiments, after sub-step 258, operation may loop back to sub-step 250 to allow the user 32 to enter another soft selection criterion 74, while in other embodiments, operation may instead advance to sub-step 260. It should be understood that if a plurality of soft selection criterion 74 are used (e.g., due to repetition of sub-steps 250-258), multiple soft weights 92 may be generated for each of the non-removed EEI item IDs 62.

In sub-step 260, client interface module 52 presents the user 32 with a relative option to choose a relative selection criterion 66, such as by displaying relative selection criterion entry form 76 (e.g., received from selection module 60 operating as a web server) on display 48. For example, client interface module 52 may prompt the user 32 to select a particular feature type (e.g., power supply voltage, power supply capacity, amount of RAM, server/rack/power supply width, etc.), a target value 67, and a direction 68 of comparison. Then, in sub-step 262, client interface module 52 receives input from the user 32 via the input device(s) 46, which it sends to the selection module 60.

Then, in step 270, selection module 60 applies a filter based on the received relative selection criterion 66 to add additional removed EEI item IDs 64 (and correspondingly remove those from the list of non-removed EEI item IDs 62); see, e.g., sub-step 142 from method 100.

Then, in step 280, selection module 60 performs sorting based at least on the received relative selection criterion 66 to the list of non-removed EEI item IDs 62 to yield an ordering 98. In some embodiments, step 280 may include sub-steps 282, 284, 286.

In sub-step 282, selection module 60 generates relative weights 90 for the list of non-removed EEI item IDs 62 (see, e.g., sub-step 154 from method 100). Then, in sub-step 284 (performed only if sub-steps 250-258 were performed), selection module 60 calculates the overall weight 96 for each of the non-removed EEI item IDs 62 by multiplying the relative weight 90 (calculated in sub-step 282) by the soft weight(s) 92 (calculated in sub-step 256) for that non-removed EEI item ID 62. In embodiments in which sub-steps 250-258 are omitted, the relative weight 90 may be used as the overall weight 96. Once the overall weights 96 have been calculated, they may be sorted from high to low in order to yield the ordering 98. In some embodiments, in sub-step 286, if two non-removed EEI item IDs 62 have equal overall weight 96, then another sorting criterion may be used to break the tie, such as, for example, sorting by price or popularity.

Then, in step 290, client interface module 52 displays descriptions of the non-removed EEI item IDs 62 in the sorted order 98 on display screen 48, in the form of EEI descriptors 86. It should be understood that it is possible that some of the EEI descriptors 86 may not be visible on the display 48 at once, since the user 32 may operate input device 46 to scroll through the list of EEI descriptors 86. In some embodiments, client interface module 52 may operate as a web page within a web browser operating on client computing device 34 in communication with selection module 60 operating as a web server on server computing device 36.

Finally, in step 295, selection module 60 receives a selection of an EEI item 54 from the user 32 via the user making a selection of one of the EEI descriptors 86 using the input device 46, the selection being transmitted from client computing device 34 to server computing device 36. In some embodiments, method 200 may then be repeated to allow for selection of another EEI item 54.

Thus, a configuration tool that allows a user 32 to select and configure EEI items 54 in a flexible manner using a flexible set of sorting and filtering tools has been provided. In some embodiments, a configuration tool includes a relative selection criterion 66 that allows a user 32 to enter a target value 67 for a feature, which allows the tool to filter out EEI items 54 that do not meet the target criterion and to also sort the remaining items of EEI 54 based on closeness to the target value 67 for the feature. In some embodiments, the tool may automatically filter out items of EEI 54 that are not compatible with previous selections based on a database of compatibility criteria. In some embodiments, the tool may provide the option to the user 32 to enter several different criteria of different types.

Current EEI selection systems may display EEI items with conventional filtering and sorting tools. Such EEI selection systems may operate inefficiently because it may not be possible to enter filtering and sorting criteria that combine to display the EEI items in the most helpful manner to users. This is a technical problem. An example embodiment of an automated EEI selection system is provided that allows a user to configure EEI in a flexible manner using a flexible set of sorting and filtering tools. In some example embodiments, a configuration tool includes a relative selection criterion that allows a user to enter a target value for a feature, which allows the tool to filter out EEI items that do not meet the target criterion and to also sort the remaining items of EEI based on closeness to the target value for the feature. In some example embodiments, the tool may automatically filter out items of EEI that are not compatible with previous selections based on a database of compatibility criteria. In some example embodiments, the tool may provide the option to the user to enter several different criteria of different types. At least the foregoing combinations of features comprise automated EEI selection systems that serve as technical solutions to the foregoing technical problem. These technical solutions are not routine, and they are unconventional. These technical solutions are practical applications of automated EEI selection system designs that solve the foregoing technical problem and constitute improvements in the technical field of EEI selection systems.

Further embodiments are disclosed in the following clauses:
Clause 1. A computer program product comprising a non-transitory computer-readable storage medium storing a set of instructions, which, when executed by a computing device, cause the computing device to receive, from a user, a selection of Electrical Equipment Infrastructure (EEI) drawn from a list of EEI, by:
   receiving a relative selection criterion from the user, the relative selection criterion including a target value for a first feature of the EEI and a direction of comparison;
   filtering out, from the list, EEI having values for the first feature that are outside the direction of comparison from the target value;
   sorting remaining EEI from the list based on closeness of the first feature to the target value, yielding a sorted order;
   displaying the remaining EEI in the sorted order on a display screen; and
   receiving a selection of EEI from the displayed EEI from the user via a user interface device.
Clause 2. The computer program product of clause 1 wherein:
   the set of instructions, when executed by the computing device, further cause the computing device to receive a soft selection criterion from the user, the soft selection criterion indicating a second feature that the user would prefer the EEI to have; and
   sorting the remaining EEI from the list includes multiplying a relative weight for each of the remaining EEI from the list by a soft weight for that EEI, the relative weight being based on the closeness of the value of the first feature for that EEI to the target value and the soft weight being based on whether that EEI includes the second feature.
Clause 3. The computer program product of clause 2 wherein the soft weight is configured to have one of a fixed number of at least two discrete values: (a) a first value for EEI that includes the second feature, and (b) one or more second values for EEI that does not include the second feature, the first value being larger than each of the one or more second values.
Clause 4. The computer program product of clause 1 wherein sorting the remaining EEI from the list includes calculating a relative weight for each remaining EEI from the list, the relative weight being based on the closeness of the value of the first feature for that EEI to the target value.
Clause 5. The computer program product of clause 4 wherein calculating the relative weight for each remaining EEI from the list includes dividing 1 by the sum of 1 and the absolute difference between the value of the first feature for that EEI and the target value (1 / (1+ |first feature value - target value|)).
Clause 6. The computer program product of clause 4 wherein sorting the remaining EEI from the list further includes, for EEI having equal relative weights, sorting those EEI with equal relative weights using another sorting criterion.
Clause 7. The computer program product of clause 6 wherein sorting those EEI using the other sorting criterion includes sorting based on at least one of price or popularity of those EEI among other users.
Clause 8. The computer program product of clause 1 wherein the set of instructions, when executed by the computing device, further cause the computing device to:
   receive a hard selection criterion from the user, the hard selection criterion including a cutoff value for a second feature of the EEI and a second direction of comparison; and
   prior to sorting, further filter out, from the list, EEI having values for the second feature that are outside the second direction of comparison from the cutoff value.
Clause 9. The computer program product of clause 1, wherein the set of instructions, when executed by the computing device, further cause the computing device to present a plurality of criterion selection options to the user in a predetermined order, the plurality of criterion selection options at least including a first option to choose the relative selection criterion.
Clause 10. The computer program product of clause 9, wherein presenting the plurality of criterion selection options to the user in the predetermined order includes:
   presenting the user with a second option to choose a hard selection criterion as an initial criterion selection option presented to the user prior to all others of the plurality of criterion selection options, the hard selection criterion including a cutoff value for a second feature of the EEI and a second direction of comparison; and
   presenting the user with the first option to choose the relative selection criterion as a last criterion selection option presented to the user after all others of the plurality of criterion selection options.
Clause 11. The computer program product of clause 10 wherein presenting the plurality of criterion selection options to the user in the predetermined order further includes presenting the user with a third option to choose a soft selection criterion as an intermediate criterion selection option presented to the user after the initial criterion selection option and before the last criterion selection option, the soft selection criterion indicating a third feature that the user would prefer the EEI to have.
Clause 12. A method, performed by a computing device, of receiving, from a user, a selection of Electrical Equipment Infrastructure (EEI) drawn from a list of EEI, the method comprising:
   receiving a relative selection criterion from the user, the relative selection criterion including a target value for a first feature of the EEI and a direction of comparison;
   filtering out, from the list, EEI having values for the first feature that are outside the direction of comparison from the target value;
   sorting remaining EEI from the list based on closeness of the first feature to the target value, yielding a sorted order;
   displaying the remaining EEI in the sorted order on a display screen; and
   receiving a selection of EEI from the displayed EEI from the user via a user interface device.
Clause 13. The method of clause 12 wherein:
   the method further comprises receiving a soft selection criterion from the user, the soft selection criterion indicating a second feature that the user would prefer the EEI to have; and
   sorting the remaining EEI from the list includes multiplying a relative weight for each of the remaining EEI from the list by a soft weight for that EEI, the relative weight being based on the closeness of the value of the first feature for that EEI to the target value and the soft weight being based on whether that EEI includes the second feature.
Clause 14. The method of clause 13 wherein the soft weight is configured to have one of a fixed number of at least two discrete values: (a) a first value for EEI that includes the second feature, and (b) one or more second values for EEI that does not include the second feature, the first value being larger than each of the one or more second values.
Clause 15. The method of clause 12 wherein sorting the remaining EEI from the list includes calculating a relative weight for each remaining EEI from the list, the relative weight being based on the closeness of the value of the first feature for that EEI to the target value.
Clause 16. The method of clause 15 wherein calculating the relative weight for each remaining EEI from the list includes dividing 1 by the sum of 1 and the absolute difference between the value of the first feature for that EEI and the target value (1 / (1+ |first feature value - target value|)).
Clause 17. A computing system comprising:
   a display screen;
   a user interface (UI) device; and
   computing circuitry coupled to memory configured to:
      receive a relative selection criterion from the user via the UI device, the relative selection criterion including a target value for a first feature of Electrical Equipment Infrastructure (EEI) drawn from a list of EEI and a direction of comparison;
      filter out, from the list, EEI having values for the first feature that are outside the direction of comparison from the target value;
      sort remaining EEI from the list based on closeness of the first feature to the target value, yielding a sorted order;
      display the remaining EEI in the sorted order on the display screen; and
      receive a selection of EEI from the displayed EEI from the user via the UI device.
Clause 18. The computing system of clause 17 wherein:
   the computing circuitry coupled to the memory is further configured to receive a soft selection criterion from the user, the soft selection criterion indicating a second feature that the user would prefer the EEI to have; and
   sorting the remaining EEI from the list includes multiplying a relative weight for each of the remaining EEI from the list by a soft weight for that EEI, the relative weight being based on the closeness of the value of the first feature for that EEI to the target value and the soft weight being based on whether that EEI includes the second feature.
Clause 19. The computing system of clause 18 wherein the soft weight is configured to have one of a fixed number of at least two discrete values: (a) a first value for EEI that includes the second feature, and (b) one or more second values for EEI that does not include the second feature, the first value being larger than each of the one or more second values.
Clause 20. The computing system of clause 17 wherein sorting the remaining EEI from the list includes calculating a relative weight for each remaining EEI from the list, the relative weight being based on the closeness of the value of the first feature for that EEI to the target value.

While various embodiments of the invention have been particularly shown and described, it will be understood by those skilled in the art that various changes in form and details may be made therein without departing from the scope of the invention as defined by the appended claims.

It should be understood that although various embodiments have been described as being methods, software embodying these methods is also included. Thus, one embodiment includes a tangible computer-readable medium (such as, for example, a hard disk, a floppy disk, an optical disk, computer memory, flash memory, etc.) programmed with instructions, which, when performed by a computer or a set of computers, cause one or more of the methods described in various embodiments to be performed. Another embodiment includes a computer which is programmed to perform one or more of the methods described in various embodiments.

Furthermore, it should be understood that all embodiments which have been described may be combined in all possible combinations with each other, except to the extent that such combinations have been explicitly excluded.

Finally, nothing in this Specification shall be construed as an admission of any sort. Even if a technique, method, apparatus, or other concept is specifically labeled as "background" or as "conventional," Applicants make no admission that such technique, method, apparatus, or other concept is actually state of the art under Article 54 or 56 EPC, such determination being a legal determination that depends upon many factors, not all of which are known to Applicants at this time.

## Claims

1. A method, performed by a computing device, of receiving, from a user, a selection of Electrical Equipment Infrastructure (EEI) drawn from a list of EEI, the method comprising:
receiving a relative selection criterion from the user, the relative selection criterion including a target value for a first feature of the EEI and a direction of comparison;
filtering out, from the list, EEI having values for the first feature that are outside the direction of comparison from the target value;
sorting remaining EEI from the list based on closeness of the first feature to the target value, yielding a sorted order;
displaying the remaining EEI in the sorted order on a display screen; and
receiving a selection of EEI from the displayed EEI from the user via a user interface device.

2. The method of claim 1 wherein:
the method further comprises receiving a soft selection criterion from the user, the soft selection criterion indicating a second feature that the user would prefer the EEI to have; and
sorting the remaining EEI from the list includes multiplying a relative weight for each of the remaining EEI from the list by a soft weight for that EEI, the relative weight being based on the closeness of the value of the first feature for that EEI to the target value and the soft weight being based on whether that EEI includes the second feature.

3. The method of claim 2 wherein the soft weight is configured to have one of a fixed number of at least two discrete values: (a) a first value for EEI that includes the second feature, and (b) one or more second values for EEI that does not include the second feature, the first value being larger than each of the one or more second values.

4. The method of claim 1, wherein sorting the remaining EEI from the list includes calculating a relative weight for each remaining EEI from the list, the relative weight being based on the closeness of the value of the first feature for that EEI to the target value.

5. The method of claim 4 wherein calculating the relative weight for each remaining EEI from the list includes dividing 1 by the sum of 1 and the absolute difference between the value of the first feature for that EEI and the target value (1 / (1+ |first feature value - target value|)).

6. The method of claims 4 or 5 wherein sorting the remaining EEI from the list further includes, for EEI having equal relative weights, sorting those EEI with equal relative weights using another sorting criterion.

7. The method of claim 6 wherein sorting those EEI using the other sorting criterion includes sorting based on at least one of price or popularity of those EEI among other users.

8. The method of any of the above claims, further comprising:
receiving a hard selection criterion from the user, the hard selection criterion including a cutoff value for a second feature of the EEI and a second direction of comparison; and
prior to sorting, further filtering out, from the list, EEI having values for the second feature that are outside the second direction of comparison from the cutoff value.

9. The method of any of the above claims, further comprising:
presenting a plurality of criterion selection options to the user in a predetermined order, the plurality of criterion selection options at least including a first option to choose the relative selection criterion.

10. The method of claim 9, wherein presenting the plurality of criterion selection options to the user in the predetermined order includes:
presenting the user with a second option to choose a hard selection criterion as an initial criterion selection option presented to the user prior to all others of the plurality of criterion selection options, the hard selection criterion including a cutoff value for a second feature of the EEI and a second direction of comparison; and
presenting the user with the first option to choose the relative selection criterion as a last criterion selection option presented to the user after all others of the plurality of criterion selection options.

11. The method of claim 10 wherein presenting the plurality of criterion selection options to the user in the predetermined order further includes presenting the user with a third option to choose a soft selection criterion as an intermediate criterion selection option presented to the user after the initial criterion selection option and before the last criterion selection option, the soft selection criterion indicating a third feature that the user would prefer the EEI to have.

12. A computer program product comprising a non-transitory computer-readable storage medium storing a set of instructions, which, when executed by a computing device, cause the computing device to operate according to any of method claims 1 to 11.

13. A computing system comprising:
a display screen;
a user interface (UI) device; and
computing circuitry coupled to memory configured to:
receive a relative selection criterion from the user via the UI device, the relative selection criterion including a target value for a first feature of Electrical Equipment Infrastructure (EEI) drawn from a list of EEI and a direction of comparison;
filter out, from the list, EEIhaving values for the first feature that are outside the direction of comparison from the target value;
sort remaining EEI from the list based on closeness of the first feature to the target value, yielding a sorted order;
display the remaining EEI in the sorted order on the display screen; and
receive a selection of EEI from the displayed EEI from the user via the UI device.

14. The computing system of claim 13 wherein:
the computing circuitry coupled to the memory is further configured to operate the computing system according to any of method claims 2 to 11.

15. A computer program comprising instructions to cause the system of claim 13 to execute the method of any of claims 1 to 11.
